Europäisches Patentamt

European Patent Office

Office européen des brevets

(19)

(11) Numéro de publication : **0 507 712 A1**

# (12) DEMANDE DE BREVET EUROPEEN

(21) Numéro de dépôt : **92440039.3**

(22) Date de dépôt : **03.04.92**

(51) Int. Cl.⁵ : **B25B 7/06,** // F16B37/00, F16B5/02, F16B39/28, F16C11/00

(30) Priorité : **03.04.91 FR 9104220**

(43) Date de publication de la demande : **07.10.92 Bulletin 92/41**

(84) Etats contractants désignés : **AT BE CH DE DK ES GB GR IT LI LU MC NL PT SE**

(71) Demandeur : **ETABLISSEMENTS JULES HAQUIN S.A. 15 rue du Maréchal Leclerc, BP 8 F-52800 Nogent (FR)**

(72) Inventeur : **Munier, Jean-François Rue du Tronchoy F-52800 Thivet (FR)**

(74) Mandataire : **Arbousse-Bastide, Jean-Claude Philippe CABINET ARBOUSSE BASTIDE 20, rue de Copenhague F-67000 Strasbourg (FR)**

(54) **Dispositif d'assemblage des deux branches pivotantes d'un outil.**

(57) Dispositif d'assemblage des deux branches pivotantes (2, 3) d'un outil, notamment d'une paire de ciseaux.

Ce dispositif comprend une pièce (1) en matière plastique rigide ou semi-rigide présentant une partie cylindrique (10) prolongée à l'une de ses extrémités par une tête d'appui (11) et à l'autre extrémité par une partie (11) de section non ronde dont les dimensions sont telles que ladite section s'inscrit dans la circonférence de la partie cylindrique (10), les deux parties cylindrique (10) et de section non ronde (11) étant percées, axialement d'un orifice borgne fileté (13) pour le vissage d'une vis (4) après assemblage sur ladite pièce (1) des deux branches pivotantes (1, 3), dont l'une (1) est percée d'un orifice rond (20) aux dimensions de la partie cylindrique (10) de la pièce (1) et l'autre (3) d'un orifice non rond (30) de forme correspondant à celle de la partie (11) de section non ronde de la pièce (1).

Fig. 3

EP 0 507 712 A1

La présente invention a pour objet un dispositif d'assemblage des deux branches pivotantes d'un outil, notamment d'une paire de ciseaux.

Actuellement les deux branches d'une paire de ciseaux sont assemblées au moyen d'une vis traversant l'une des branches et se vissant dans l'autre branche. Cet assemblage présente des inconvénients du fait que la vis a tendance à se dévisser et qu'il s'ensuit une imprécision de la coupe et une usure anormale des lames. De plus la partie filetée de la vis autour de laquelle tourne librement l'une des branches est érodée par la paroi de l'orifice pratiqué dans ladite branche, et les filets disparaissent progressivement, rendant impossible les éventuels resserrages de ladite vis.

Des améliorations aux dispositifs actuels ont été proposées, notamment les dispositifs décrits dans les brevets français 2.127.791, 2.639.861, 2616.096, 1.249.661 et 2.465.573, qui reposent sur l'utilisation soit d'une vis partiellement filetée, soit d'une vis et d'un écrou de forme particulière, soit d'un axe d'articulation en matière plastique placé dans l'orifice pratiqué dans l'une des branches, la vis se serrant à travers l'autre branche.

Si ces dispositifs permettent d'éviter certains des inconvénients précités, le résultat est obtenu au prix d'une fabrication plus complexe, donc plus coûteuse.

La présente invention permet de remédier à ces inconvénients en proposant un dispositif d'assemblage dont l'utilisation n'altère en rien les performances de l'outil qu'il équipe, et qui de plus est d'un coût de fabrication non seulement inférieur à ceux des dispositifs précités, mais aussi à celui d'un dispositif traditionnel, car mettant en oeuvre un nombre de pièces réduit et faisant appel à des techniques de fabrication simplifiées.

En effet l'assemblage des branches d'une paire de ciseaux par un coutelier requiert plusieurs opérations. Le forgeron livre les ébauches brutes, et le coutelier doit d'une part percer un orifice dans chacune des branches, d'autre part tarauder l'un de ces orifices et lamer l'autre et enfin effectuer le marquage avant l'opération de trempage qui précède l'assemblage.

En utilisant le dispositif d'assemblage selon l'invention, le coutelier n'a plus à effectuer que les opérations de trempage et d'assemblage.

L'assemblage des deux branches pivotantes d'un outil est réalisé, selon la présente invention, au moyen d'une pièce en matière plastique rigide ou semi-rigide, moulée ou usinée, comportant une partie cylindrique prolongée à l'une de ses extrémités par une tête d'appui et à l'autre extrémité par une partie de section autre que ronde, c'est-à-dire soit oblongue soit hexagonale ou autre, dont les dimensions sont telles que ladite section s'inscrive dans la circonférence de la partie cylindrique. Ces deux parties, la partie cylindrique et la partie de section non ronde, sont percées axialement par un orifice borgne fileté.

Conformément à l'invention, une branche de l'outil comporte un orifice rond dans lequel est introduite la partie cylindrique de la pièce, dont la hauteur correspond à l'épaisseur de ladite branche, l'autre branche comportant un orifice dont la forme et les dimensions sont celles de la partie de section non ronde de ladite pièce et dans lequel est introduite ladite partie.

Toujours conformément à l'invention, une vis est vissée dans le perçage axial fileté de manière à enserrer les deux branches entre sa tête et la tête d'appui de la pièce. La pièce est ainsi maintenue solidaire de la branche sur laquelle est vissée la vis, et cette dernière ne se desserre pas lors de l'utilisation de la paire de ciseaux, tandis que l'autre branche peut pivoter autour de la partie cylindrique de la pièce, entre la première branche et la tête d'appui de ladite pièce.

La nature du matériau dans lequel est réalisé la pièce du dispositif selon l'invention, à savoir une matière plastique rigide ou semi-rigide, dispense de placer une rondelle entre la branche pivotante et ladite pièce, dont la tête d'appui fait office de rondelle.

D'autre part, du fait de la mise en oeuvre de cette pièce, les orifices pratiqués dans les branches peuvent être de dimensions diamétrales importantes, et notamment de diamètre supérieur à l'épaisseur desdites branches, en sorte qu'ils sont réalisables par poinçonnage, opération qui peut être effectuée par le forgeron lors de la fabrication des ébauches, de même que le marquage, sans grèver le coût de fabrication. Il s'ensuit que le coutelier n'a plus à effectuer les opérations de perçage, taraudage, lamage et marquage, et qu'en outre l'assemblage selon l'invention est parfaitement réalisable en automatique, entraînant une réduction supplémentaire du coût de fabrication de l'outil.

Les avantages et les caractéristiques de la présente invention ressortiront plus clairement de la description qui suit et qui se rapporte au dessin annexé, lequel en représente un mode de réalisation non limitatif.

Dans le dessin annexé :
– la figure 1 représente une vue en perspective d'une pièce d'assemblage selon l'invention.
– la figure 2a représente une vue de profil de la même pièce.
– la figure 2b représente une vue en plan de la même pièce.
– la figure 3 représente une vue partielle, en perspective et en éclaté, d'une paire de ciseaux dont l'assemblage est réalisé selon l'invention.

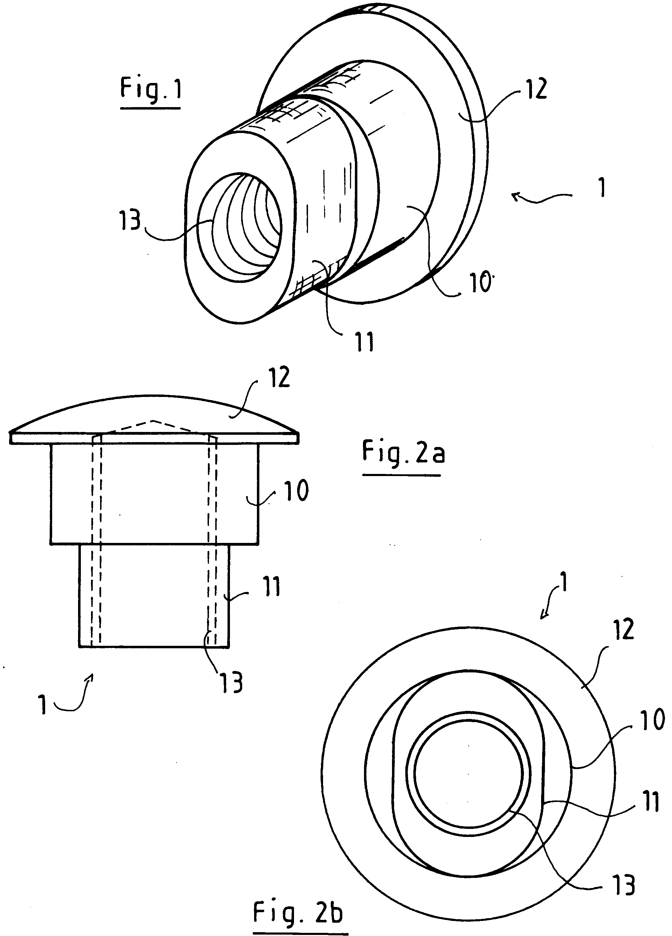

Si on se réfère aux figures 1, 2a et 2b on peut voir que la pièce 1 d'assemblage des deux branches pivotantes d'un outil tel qu'une paire de ciseaux comporte une partie cylindrique 10 prolongée d'un côté par une partie 11 de section oblongue et de l'autre par une tête d'appui 12, les parties cylindrique 10 et de section oblongue 11 étant percées axialement par un orifice borgne fileté 13.

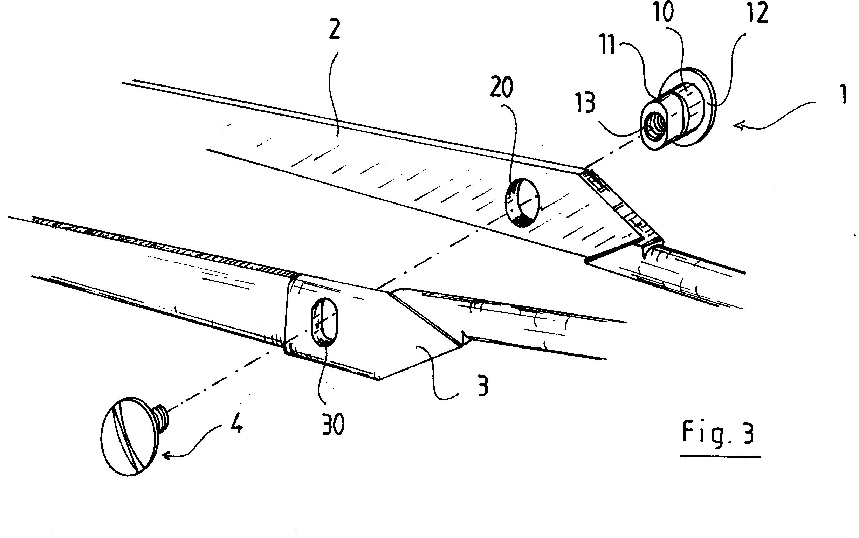

Si on se réfère maintenant à la figure 3 on peut voir que la branche 2 d'une paire de ciseaux est percée d'un orifice rond 20 destiné à recevoir la partie cylindrique 10 de la pièce 1, et l'autre branche 3 est percée d'un orifice oblong 30 destiné à recevoir la partie 11 de section oblongue de la pièce 1, ces orifices étant réalisés par poinçonnage.

Lorsque les deux branches sont assemblées sur la pièce 1, le dispositif est bloqué au moyen d'un vis 4 vissée dans l'orifice taraudé 13 de la pièce 1. Ainsi seule la branche 2 pivote autour de la pièce 1, laquelle es! immobilisée dans la branche 3, et la vis 4 en contact avec ladite branche 3 ne peut se desserrer lors de l'utilisation de la paire de ciseaux, car ne tournant pas avec la branche 2, contrairement à ce qui se passe dans les ciseaux traditionnels.

Il est en outre possible de régler la dureté des ciseaux en serrant plus ou moins fort la vis 4, du fait que la pièce 1 est réalisée en une matière plastique présentant une certaine élasticité. Enfin, si besoin est, la pièce 1 peut être aisément remplacée par une autre pièce identique, notamment en cas d'usure après un certain temps d'utilisation.

Il va de soi que la présente invention ne saurait être limitée à la description qui précède d'un de ses modes de réalisation, susceptible de subir un certain nombre de modifications sans pour autant sortir du cadre de l'invention.

## Revendications

1) Dispositif d'assemblage des deux branches pivotantes (2, 3) d'un outil, notamment d'une paire de ciseaux, caractérisé en ce qu'il comprend une pièce (1) en matière plastique rigide ou semi-rigide présentant une partie cylindrique (10) prolongée à l'une de ses extrémités par une tête d'appui (12) et à l'autre extrémité par une partie (11) de section non ronde dont les dimensions sont telles que ladite section s'inscrive dans la circonférence de la partie cylindrique (10), les deux parties cylindrique (10) et de section non ronde (11) étant percées axialement d'un orifice borgne fileté (13) pour le vissage d'une vis (4) après assemblage sur ladite pièce (1) des deux branches pivotantes (2, 3), dont l'une (2) est percée d'un orifice rond (20) aux dimensions de la partie cylindrique (10) de la pièce (1) et l'autre (3) d'un orifice non rond (30) de forme correspondant à celle de la partie (11) de section non ronde de la pièce (1).

2) Dispositif d'assemblage selon la revendication 1, caractérisé en ce que la pièce (1) est réalisée en matière plastique moulée.

3) Dispositif d'assemblage selon la revendication 1, caractérisé en ce que les orifices (20, 30) pratiqués dans les branches (2, 3) de l'outil sont réalisés par poinçonnage.

4) Outils à branches pivotantes comportant le dispositif d'assemblage qui fait l'objet des revendications 1 à 3.

Fig.1

12

13

1

10

11

12

Fig.2a

10

11

13

1

1

12

10

11

13

Fig. 2b

Fig. 3

EP 0 507 712 A1

Office européen
des brevets

**RAPPORT DE RECHERCHE EUROPEENNE**

Numero de la demande

EP 92 44 0039

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | FR-A-2 127 791 (J. WISS & SONS CO.) <br> * Page 3, lignes 4-11; page 4, lignes 12-14; figures 1-7,12-15 * <br> --- | 1-4 | B 25 B 7/06 // <br> F 16 B 37/00 <br> F 16 B 5/02 <br> F 16 B 39/28 <br> F 16 C 11/00 |
| X | US-A-1 545 211 (STORZ) <br> * Page 2, lignes 40-46; figures 1-4 * <br> --- | 1-4 | |
| X | US-A-3 289 296 (HEDSTROM et al.) <br> * Colonne 2, ligne 62 - colonne 3, ligne 46; figures 1-8 * <br> ----- | 1-4 | |

DOMAINES TECHNIQUES RECHERCHES (Int. Cl.5)

B 26 B
B 25 B

Le présent rapport a été établi pour toutes les revendications

| Lieu de la recherche | Date d'achèvement de la recherche | Examinateur |
|---|---|---|
| LA HAYE | 25-06-1992 | CALAMIDA G. |